# EUROPEAN PATENT APPLICATION

(11) **EP 3 699 448 A1**
(43) Date of publication of application: **26.08.2020**
(21) Application number: 19159100.7
(22) Date of filing: 25.02.2019
(51) Int. Cl.: F16D 7/04, F16D 43/202

(54) **REGULATING DEVICE FOR TORQUE LIMITER**

(71) Applicant: Microtecnica S.r.l., 10126 Turin (IT)
(72) Inventor: MEZZINO, Giacomo, 10127 Torino (IT); AUDRITO, Angelo, 10126 Torino (IT); TAFUNI, Domenico, 10128 Torino (IT)
(74) Representative: Dehns

(57) **Abstract**

An apparatus (100) for regulating a torque limiter, comprising a resilient member (130) configured to exert a force on one or more components of the torque limiter, wherein the force exerted by the resilient member (130) adjusts a torque limit of the torque limiter in use, a movable abutment (180) configured to contact the resilient member (130) and translatable in an axial direction to vary the force exerted by the resilient member (130), a nut (170) rotatable about the axis and configured to contact the movable abutment (180) such that a given rotational position of the nut (170) corresponds to a given axial position of the movable abutment (180), and an anti-rotation member (160) configured to move between first and second positions. In the first position the anti-rotation member (160) prevents rotational movement of the nut (170) and, in turn, prevents axial movement of the movable abutment (180), and in the second position the anti-rotation member (160) does not prevent rotational movement of the nut (170) and permits rotation of the nut (170) and, in turn, axial movement of the movable abutment (180) to vary the force exerted by the resilient member (130).

## Description

### FIELD

The present disclosure relates generally to an apparatus for regulating a torque limiter. The torque limiter may be used in various aerospace and other engineering applications where it is required to limit the torque applied between two drive members, for example the torque limiter could be for an actuator of an aircraft flight control surface.

### BACKGROUND

Torque limiters are known in the art and may comprise a first shaft or other drive member and a second shaft or other drive member. One or more coupling members may be provided to transmit torque from the shafts or drive members. A number of systems are known in the art for preventing the overload of the coupling between the shafts or drive members. These systems typically act by employing a brake that is activated once a predetermined torque limit is exceeded. Such methods of limiting torque are typically used in aircraft applications, for example when actuating an aircraft flight control surface, in order to protect the actuator from damage.

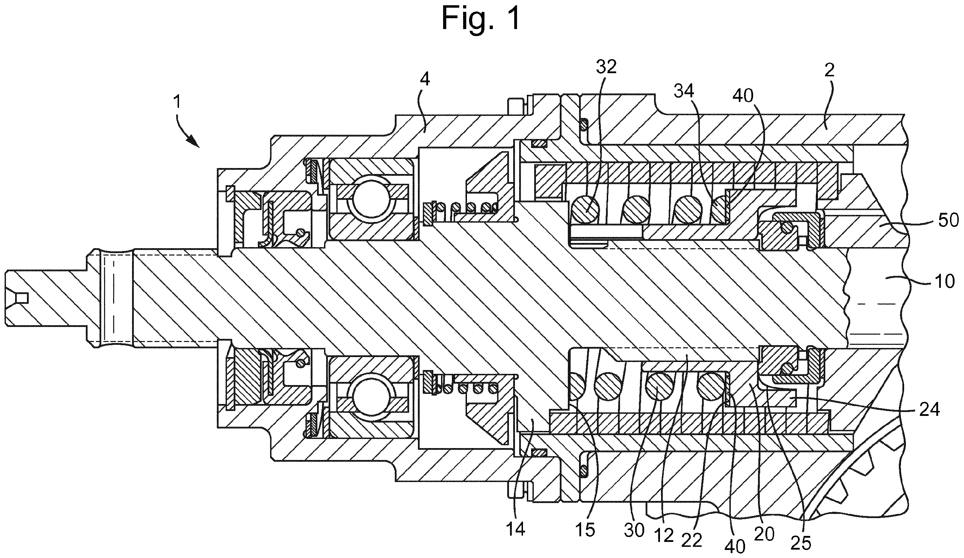

Fig. 1 shows a conventional arrangement of a torque limiter 1 that comprises an input shaft 10 contained at least partially within at least two housing portions 2, 4. The input shaft 10 connects to an output shaft 50 that may be configured to actuate a component, for example an aircraft flight control surface.

The input shaft 10 comprises a portion 12 that opposes a member 20 in a radial direction, . The member 20 is located concentrically around the shaft 10. When assembling the torque motor 1 the housing portions 2, 4 are brought together and secured to each other accordingly. Before bringing the housing portions 2, 4 together the various components within each portion 2, 4 need to be set up correctly.

The input shaft 10 further comprises a shoulder portion 14 that comprises a radially extending surface 15, which opposes a radially extending surface 22 on the member 20. A resilient member 30 is biased between the shoulder portion 14 and the member 20, and a first end 32 of the resilient member 30 is configured to bear against the radially extending surface 15 of the shoulder portion 14.

The member 20 is axially movable and is biased towards the output shaft 50, such that the resilient member 30 urges the member 20 against the output shaft 50. The member 20 comprises cam surfaces 25 that, in use, ride along cooperating surfaces (not shown) of the output shaft 50 as the torque applied between the input shaft 10 and the output shaft 50 increases. Once this torque exceeds a predetermined amount, the member 20 will decouple from the output shaft 50 and drive will no longer be transmitted by the member 20 to the output shaft 50.

One or more shims or spacers 40 are placed between the radially extending surface 22 of the member 20 and the resilient member 30, such that a second end 34 of the resilient member 30 (opposite the first end 32) is configured to bear against the one or more shims or spacers 40.

In order to regulate the force exerted by the resilient member 30 against the member 20 and, in turn, the output shaft 50, the number of shims or spacers 40 can be increased or decreased. This requires a large amount of work, for example disassembling of the entire device, including disassembling the components of the torque limiter 1 inside housing portion 102, removal of the member 20 from the input shaft 10 so that the shims or spacers 40 can be placed around the member 20.

What is desired is a torque limiter that can be regulated in a simple manner, and also relatively quickly as compared to conventional methods.

### SUMMARY

In accordance with an aspect of the present disclosure, there is provided an apparatus for regulating a torque limiter, comprising:
a resilient member configured to exert a force on one or more components of the torque limiter, wherein the force exerted by the resilient member adjusts a torque limit of the torque limiter in use;
a movable abutment configured to contact the resilient member and translatable in an axial direction to vary the force exerted by the resilient member;
a nut rotatable about the axis and configured to contact the movable abutment such that a given rotational position of the nut corresponds to a given axial position of the movable abutment; and
an anti-rotation member configured to move between first and second positions, wherein in the first position the anti-rotation member prevents rotational movement of the nut and, in turn, prevents axial movement of the movable abutment, and in the second position the anti-rotation member does not prevent rotational movement of the nut and permits rotation of the nut and, in turn, axial movement of the movable abutment to vary the force exerted by the resilient member.

The above apparatus provides a simple and efficient mechanism for regulating (or adjusting) the torque limiter, by combining the rotatable nut with the anti-rotation member as described.

The apparatus may further comprise an input shaft rotatable about the axis, and optionally an output shaft rotatable about the same (or a different) axis.

The input shaft may comprise a screw thread and the nut may be fastened onto the screw thread so as to vary the rotational position of the nut as aforesaid, for example to move the nut to one of a number of given rotational positions.

The movable abutment and/or the nut and/or the anti-rotation member may be located concentrically about the input shaft. In various embodiments the output shaft may be located concentrically about the input shaft.

The anti-rotation member may be fixed against (or otherwise prevented from) rotational movement when it occupies its first position. For example, one or more portions of the anti-rotation member may engage with a fixed housing of the torque limiter when the anti-rotation member occupies its first position (and, optionally, not when the anti-rotation member occupies its second position).

The anti-rotation member may move axially between its first position and its second position, e.g., by a user upon partial disassembly of the torque limiter.

The nut may comprise one or more notches or cavities, and the anti-rotation member may comprise one or more members configured to engage with the one or more notches or cavities when the anti-rotation member occupies its first position, such that rotational movement of the nut is prevented by and/or upon engagement of the members with the notches or cavities.

The engaging members of the anti-rotation member may always occupy the same circumferential position when the anti-rotation member occupies its first position, such that each notch or cavity corresponds to a set or predetermined rotational position of the nut. This means that the nut can be moved to various set rotational positions that each correspond to a given, set axial position of the movable abutment (and, in turn, a given force exerted by the resilient member and torque limit of the torque limiter).

The one or more notches or cavities may comprise a plurality of notches or cavities spaced around a circumference of the nut. The plurality of notches or cavities may comprise at least 2, 4, 6, 8 or even 10 notches or cavities.

The plurality of notches or cavities may be spaced equally about a circumference of the nut. The circumferential position of the notches can be configured to provide or correspond to set amounts of axial movement. For example, the notches or cavities may be spaced equally about the circumference of the nut so that that the nut is configured to rotate a set or predetermined distance (rotationally) as the engaging members are moved between different notches or cavities upon rotation of the nut.

The circumferential distance and/or rotational movement between each notch or cavity may correspond to a set and/or predetermined amount of axial movement of the nut and/or the movable abutment (and a set and/or predetermined adjustment of the torque limiter as a result). The set and/or predetermined amount of axial movement can be chosen for any particular application, but may be a value less than about 1 mm, 0.5 mm or even 0.1 mm.

In one example, the nut may comprise 10 notches, each separated by an angle of about 36 degrees from an adjacent notch, wherein a rotation of 36 degrees of the nut corresponds to an axial movement of the nut (along the axis A) of about 0.1 mm. Of course, any number of notches may be provided (e.g., more or less than 10), and the nut and movable abutment could be tailored to provide any desired amount of axial movement for a given rotational movement of the nut.

The engaging members may be tines configured to mate with any one of the notches or cavities. The tines may have a snug fit within the notch or cavity when the anti-rotation member occupies its first position. The tines may be configured to slide in and out of a respective notch or cavity as the anti-rotation member moves between its first and second positions, so as to engage and disengage the anti-rotation member with the nut.

In an aspect of the present disclosure, there is provided a torque limiter comprising an apparatus as described above.

The torque limiter may further comprise a rotational input drive member, for example the input shaft described above, and a rotational output drive member co-axial with the input drive member, for example the output shaft described above. The torque limiter may comprise one or more components through which torque is at least partially transmitted from the input drive member to the output drive member, wherein the force exerted by the resilient member adjusts a torque limit of the torque limiter in use by varying the force exerted by the resilient member on the one or more components.

The torque limiter may further comprise a braking device attached to said input drive member or said output drive member and configured to restrict or prevent rotational movement of the torque limiter if the torque applied by said input drive member exceeds a given or predetermined amount.

The one or more components may be or comprise a coupling member, which may be movable between a first position and a second position. The resilient member may exert a force on the coupling member, which force may correspond to a given torque limit of the torque limiter. In the first position the coupling member may couple the input drive member and the output drive member to transfer torque between the input drive member and the output drive member, and in the second position the coupling member is decoupled from one or other of the input drive member and the output drive member, so as to prevent torque being transferred between the input drive member and the output drive member.

The force required to move the coupling member between its first and second positions may be correlated with the force exerted by the resilient member on the coupling member, such that, e.g., an increase in the force exerted by the resilient member on the coupling member causes an increase in the force required to move the coupling member between its first and second position and, in turn, an increase in the torque limit of the torque limiter. Similarly, a decrease in the force exerted by the resilient member on the coupling member may cause a decrease in the force required to move the coupling member between its first and second position and, in turn, a decrease in the torque limit of the torque limiter.

It will be appreciated, therefore, that rotational movement of the nut (e.g., between each notch or cavity of the anti-rotation member) as discussed above may correspond to a given amount of axial movement of the movable abutment, thereby providing an increase or decrease (depending on the direction of rotational movement of the nut) in the force exerted by the resilient member on the coupling member and, in turn, a corresponding (e.g., set and/or predetermined) increase or decrease in the torque limit of the torque limiter.

### BRIEF DESCRIPTION OF THE DRAWINGS

Various embodiments will now be described, by way of example only, and with reference to the accompanying drawings in which:
Fig. 1 shows a conventional arrangement of a torque limiter;
Fig. 2 shows an embodiment of an apparatus to be used with a torque limiter in accordance with the present disclosure, wherein various parts of the torque limiter are included in the illustration, but other parts are not for the purposes of illustration;
Figs. 3A-3D show various components of the apparatus of Fig. 2 in isolation, to illustrate their various features separate from each other;
Fig. 4 shows the apparatus of Fig. 2 partly disassembled to illustrate how the torque limit of the torque limiter may be adjusted using the apparatus disclosed herein;
Fig. 5 shows various components of the apparatus of Fig. 2, with various components of the torque limiter not included for the purposes of illustration;
Fig. 6 shows certain components of the apparatus of Fig. 2 in isolation and for the purposes of illustration; and
Fig. 7A and 7B show how the apparatus of the embodiment of Fig. 2 may be used in a particular example of a torque limiter to prevent torque being transmitted between an input shaft and an output shaft in use.

### DETAILED DESCRIPTION

Herewith will be described various embodiments of an apparatus for regulating a torque limiter. The apparatus may be used with any torque limiter that transfers torque between two drive members, such as a between two drive shafts. Such torque limiters may include various components between the shafts that permit torque to be transferred from one shaft to the other, whilst comprising further components that are configured to limit this torque, for example a braking device. The torque limiters described herein may be used in various aerospace and other engineering applications where it is required to limit the torque applied between two drive members, for example the torque limiter could be for an actuator, e.g., of an aircraft flight control surface. The actuator may drive a first shaft of the torque limiter, and a second shaft of the torque limiter may be configured to drive a component operably connected thereto, e.g., the flight control surface. The torque limiter may be configured to prevent excessive torque being applied to the actuator by the component, e.g., the flight control surface.

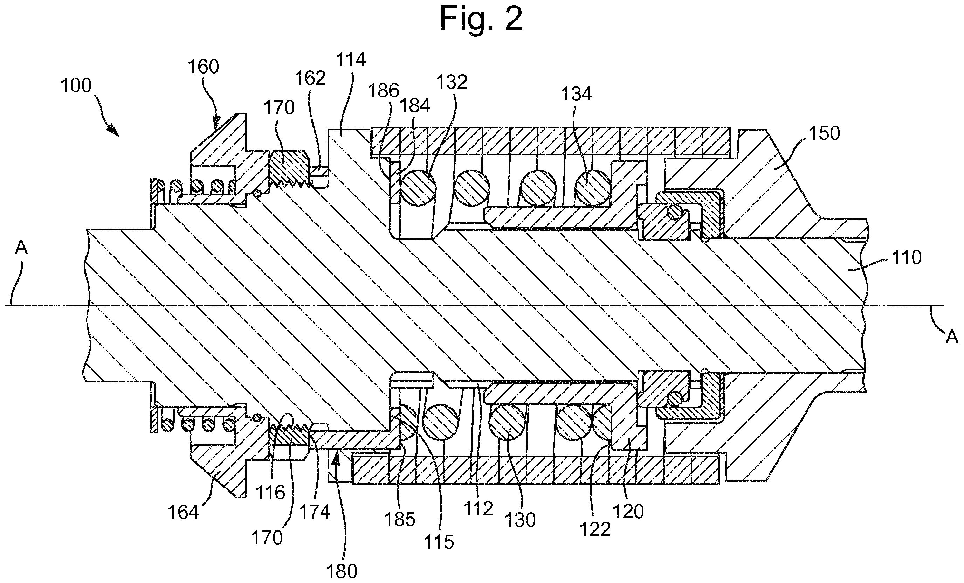

Fig. 2 shows an embodiment of an apparatus to be used with a torque limiter 100, which may be similar to that shown in Fig. 1, but where parts of the apparatus have been removed or modified to provide a faster and simpler manner in which to regulate the torque limiter by adjusting the force exerted by the resilient member thereof.

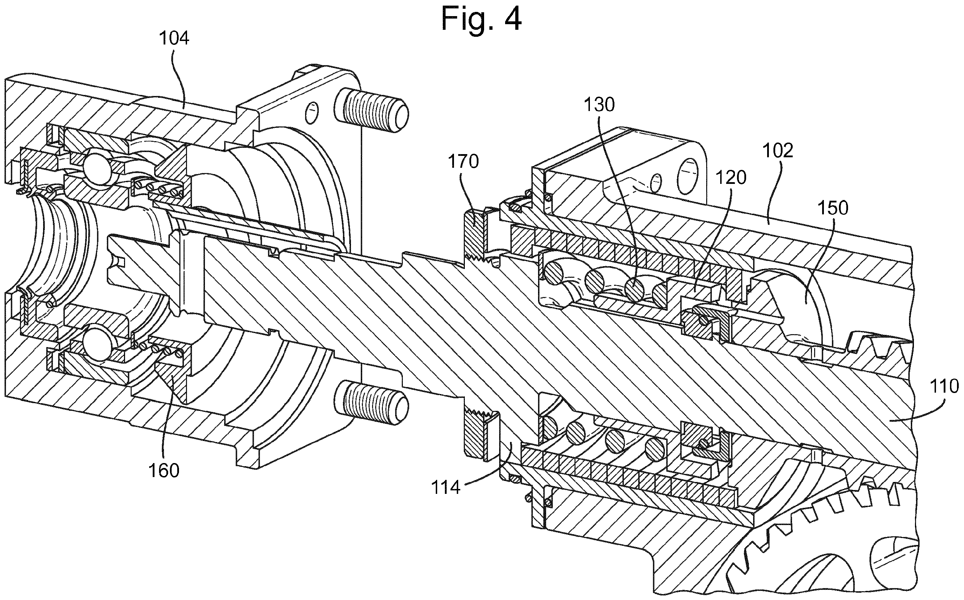

The torque limiter 100 comprises a drive member or shaft 110 that is rotatable about an axis A, and similar to the embodiment of Fig. 1 the torque limiter 100 is contained at least partially within first and second housing portions 102 and 104 (see Fig. 4). The torque limiter 100 operates under the same principles as that of Fig. 1, in that it functions to limit the torque applied between the drive shaft 110 and an output shaft 150.

The shaft 110 comprises a portion 112 that connects to a coupling member 120 via a splined connection, such that the coupling member 120 can be slotted onto the shaft 110 and, once located on the shaft 110 will rotate with the shaft 110. The splined connection between the shaft 110 and the coupling member 120 may permit relative axial movement of the coupling member 120 along the shaft 110 (i.e., along the axis A).

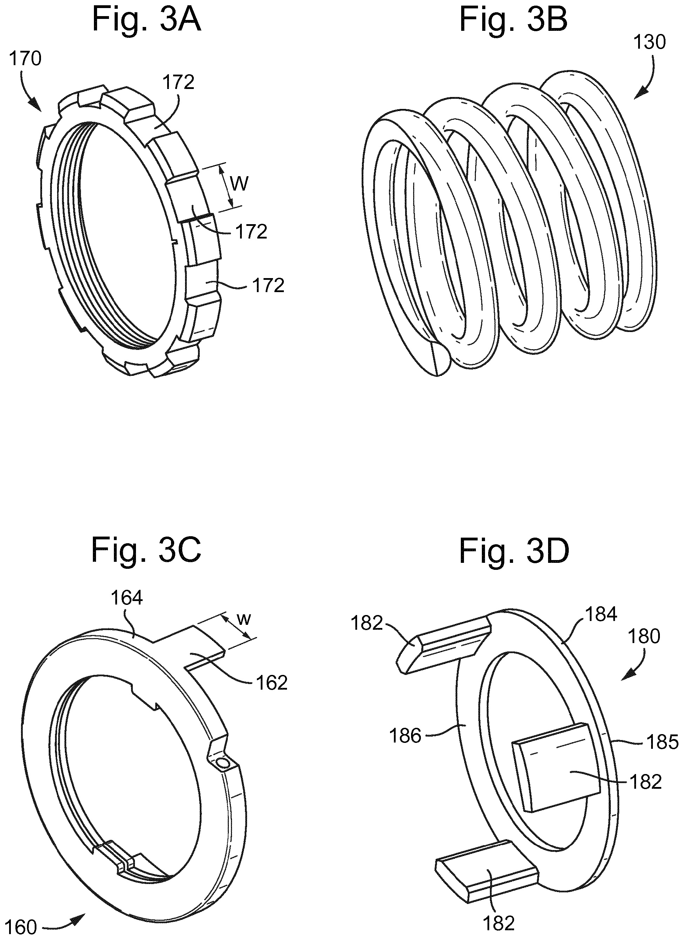

The torque limiter 100 further comprises a resilient member 130 (e.g., a spring) that is biased between the shaft 110 and the coupling member 120, so that the coupling member 120 is urged against the output shaft 150 by the resilient member 130. That is, the resilient member 130 urges the coupling member 120 in a direction away from the shoulder portion 114 of the shaft 110. The resilient member 130 is shown in isolation in Fig. 3B.

In contrast to the embodiment of Fig. 1, no shims or spacers are required (although some could be provided) between the radially extending surface 122 of the coupling member 120 and the resilient member 130 in order to regulate the force exerted by the resilient member 130. Instead, the torque limiter is adapted so that the force exerted by the resilient member 130 can be varied more easily and quickly.

As shown in Fig. 2 the shaft 110 comprises a screw thread 116 located on the opposite side of the shoulder portion 114 (in an axial direction) to the resilient member 130. The torque limiter 100 further comprises a nut 170 that is fastened onto and cooperates with this screw thread and may be rotated about the shaft 110 (and axis A) in order to move the nut 170 along the screw thread 116, such that the nut 170 moves in an axial direction. The nut 170 is also shown in isolation in Fig. 3A.

The torque limiter 100 comprises an anti-rotation member 160 that is located concentrically around the shaft 110 and is fixed against rotation. The anti-rotation member 160 comprises a substantially annular portion 164 and a plurality of tines 162 that extend axially towards the shoulder portion 114 of the shaft 110.

Referring to Fig. 3A, the nut 170 comprises a plurality of circumferentially spaced notches 172. These may be formed by cutting out a notch in the circumference of the nut 170. The notches 172 may each comprise a circumferential width W, and extend from one axial end of the nut 170 to the other, such that the width W of each notch 172 is maintained along the axial length of the nut 170. In some embodiments the notches 172 may instead be provided in the form of cavities that extend axially through the body of the nut 170 and have the same width W along its axial length.

Referring to Fig. 2 in combination with Figs. 3A and 3C, the tines 162 of the anti-rotation member 160 have a circumferential width W corresponding substantially to that of the notches 172, such that they are configured to slot into the notches 172 upon assembly of the torque limiter 100. As the anti-rotation member 160 is restricted from radial movement, this means that the nut 170 is also restricted from radial movement when the tines 162 of the anti-rotation member 160 engage with the notches 172 of the nut 170. As will be described in more detail below, to allow rotation of the nut 170 the anti-rotation member 160 may be removed so that the tines 162 thereof disengage with the notches 172.

The torque limiter 100 comprises a movable abutment 180 that is located concentrically around the shaft 110 and comprises an annular portion 184 comprising a radially and circumferentially extending face 185, as well as a number of tines 182 that extend from an opposite face 186 in an axial direction. The tines 182 may project from a radially outermost circumference of the face 186 of the annular portion 184 and in a direction away from the resilient member 130. The tines 182 are configured to contact the nut 170, for example a radially extending face 174 thereof, such that rotation of the nut 170 causes a corresponding axial movement of the movable abutment 180. The movable abutment 180 is shown in isolation in Fig. 3D

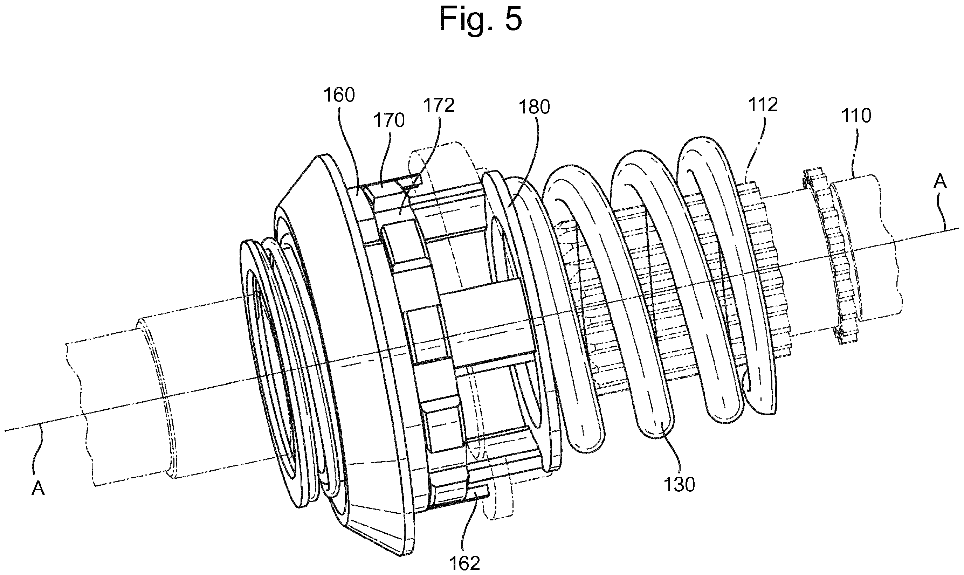

As shown in Figs. 4 and 5, the first and second housing portions 102, 104 are detachable from one another, in the same manner as the torque limiter 1 described in respect of Fig. 1. In contrast to the embodiment of Fig. 1, in the embodiment of Figs. 2 and 4 the adjustment of the force exerted by the resilient member 130 may be carried out without disassembling the components inside the first housing portion 102. Various features described in connection with this embodiment allow such adjustment to be carried out precisely and more simply and quickly, as described in more detail below.

To adjust the force exerted by the resilient member 130 on the coupling member 120 (or set the "preload" of the resilient member 130), the anti-rotation member 160 is pulled out, which may be done by detaching the first and second housing portions 102, 104 from one another as shown in Fig. 4. The nut 170 may then be rotated to a suitable angle, which corresponds to a suitable axial position of the nut 170. Upon rotation of the nut 170, the movable abutment 180 will move in an axial direction corresponding to the distance that the nut 170 moves in an axial direction as a result of its rotation. This movement of the movable abutment 180 will cause the resilient member 130 to compress or decompress (depending upon the direction of the axial movement) and change the force exerted by the resilient member 130 on the coupling member 120.

Once the desired preload is set, the anti-rotation member 160 can be inserted back into position, such that the tines 162 of the anti-rotation member 160 pass through respective notches 172 of the nut 170.

It will be appreciated that a given rotation of the nut 170 corresponds to a given amount of axial movement of the nut 170 (i.e., along the axis A), and in addition that the tines 162 of the anti-rotation member 160 will always occupy the same circumferential position, since the anti-rotation member 160 is fixed against rotational movement. As such, the circumferential position of the notches 172 can be configured to provide set amounts of axial movement. For example, as shown in Fig. 5 the notches 172 may be spaced equally about the circumference of the nut 170 so that that the nut 170 can only move a set amount in the axial direction. The set amount can be chosen for any particular application, but may be a value less than about 1 mm, 0.5 mm or even 0.1 mm.

In the example shown in Fig. 5 there are 10 notches 172, each separated by an angle of about 36 degrees from an adjacent notch 172, wherein a rotation of 36 degrees of the nut 170 corresponds to an axial movement of the nut 170 (along the axis A) of 0.1 mm with an error of less than 1%. Of course, any number of notches 172 may be provided (e.g., more or less than 10), and the screw thread 116 could be tailored to provide any desired amount of axial movement.

The shaft 110 and/or nut 170 may comprise visual and/or tactile features 117, 177 that indicate to a user the rotational position of the nut 170 with respect to the shaft 110. In the example of Fig. 5 the features include identification marks 177 located circumferentially around a radially extending face 176 of the nut 170 that faces away from the shoulder portion 114 of the shaft 110 in use. The circumferential position of the marks 177 corresponds to the circumferential position of the notches 172, and further marks 179 may be provided to indicate the set amount of axial movement that is achieved upon rotation of the nut 170.

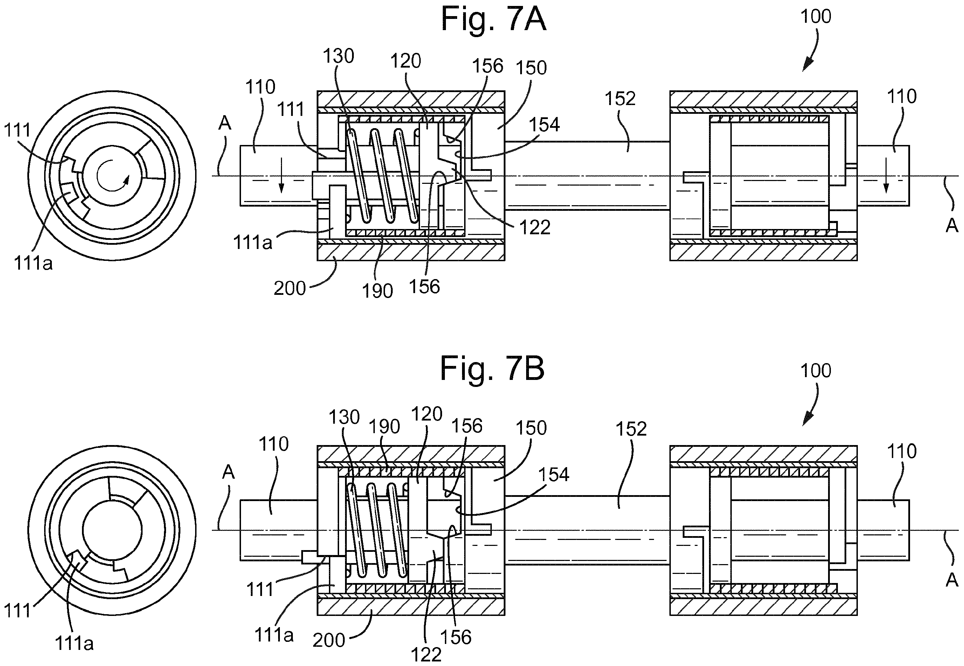

Figs. 7A and 7B show one embodiment of a torque limiter 100 that may be used with the apparatus claimed and described in the present disclosure.

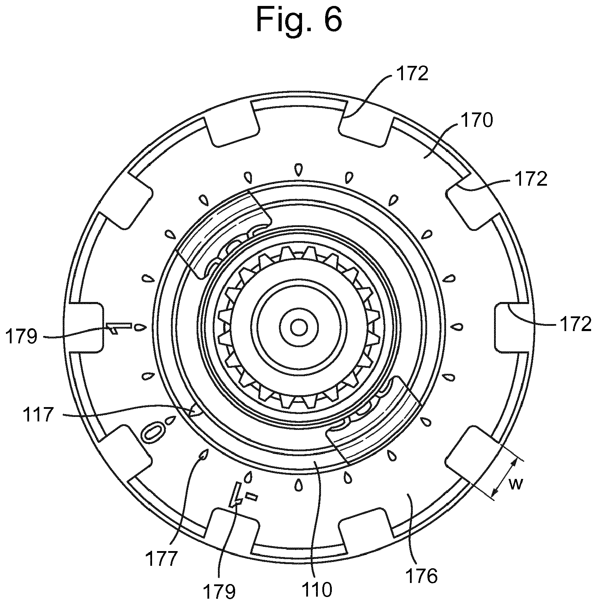

The torque limiter 100 may be substantially the same as that described above in respect of Figs. 2-6, that is comprising an input shaft 110 and an output shaft 150, wherein in use rotation of the input shaft 110 causes a corresponding rotation of the output shaft 150. Torque is transmitted from the input shaft 110 to the output shaft 150, which is provided in the form of a sleeve located concentrically around the input shaft 110.

In accordance with various embodiments, the output shaft 150 may comprise an intermediate portion 152 comprising a screw thread (not shown) configured to cooperate with a component (e.g., a flight control surface) for driving the component. In one example, the screw thread could form part of a worm screw.

In normal operation the input shaft 110 will transmit an input torque to the coupling member 120, such that the coupling member 120 rotates with the input shaft 110. This may be achieved using a splined arrangement as described above. Torque is then transferred from the coupling member 120 onto the output shaft 150 via an axial extension 122 of the coupling member 120.

The axial extension 122 fits within a circumferential groove 154 of the output shaft 150 and presses against axially extending cam surfaces 156 thereof in order to transmit torque from the coupling member 120 to the output shaft 150 as aforesaid. The axially extending surfaces 156 are spaced apart in the circumferential direction and are angled so that abutting surfaces of the axial extension 122 of the coupling member 120 can ride up the surfaces 156 in use.

During normal operation torque will be transmitted through contact of the axial extension 122 and one of the axially extending surfaces 156 in order to rotate the output shaft 150 and operate a component connected thereto. As discussed above throughout this operation the resilient member 130 will urge the coupling member 120 towards the output shaft 150, and so force the axial extension 122 of the coupling member 120 into the circumferential groove 154 of the output shaft.

If the torque between the input shaft 110 and the output shaft 150 exceeds a given and/or predetermined amount then the axial extension 122 of the coupling member 120 will ride up the cam surfaces 156 of the output shaft 150, and force the coupling member 120 axially away from the output shaft 150, ultimately disengaging the axial extension 122 from the circumferential cavity 154. When the cam surface 156 of the coupling member 120 is completely disengaged from the circumferential cavity 154, the input shaft 110 is free to rotate relative to the output shaft 150, and an axially extending surface 111 of the input shaft 110 will rotate relative to an extension 111a of the outer resilient member 190. After a short rotation the axially extending surface 111 of the input shaft 110 will engage with the extension 111a of the outer resilient member 190. This causes the outer resilient member 190 to be urged radially outward against a fixed housing 200. As such, this engages the torque limiter 100 and prevents further movement of the input shaft 110.

The torque limiter of various aspects and embodiments of the present disclosure is not limited to the particular type of torque limiter shown in the illustrated embodiments. The technology described herein may be applied to any torque limiter in which a force exerted by a resilient member adjusts a torque limit of the torque limiter.

Although the present disclosure has been described with reference to various embodiments, it will be understood by those skilled in the art that various changes in form and detail may be made without departing from the scope of the invention as set forth in the accompanying claims.

## Claims

1. An apparatus for regulating a torque limiter, comprising:
a resilient member configured to exert a force on one or more components of the torque limiter, wherein the force exerted by the resilient member adjusts a torque limit of the torque limiter in use;
a movable abutment configured to contact the resilient member and translatable in an axial direction to vary the force exerted by the resilient member;
a nut rotatable about the axis and configured to contact the movable abutment such that a given rotational position of the nut corresponds to a given axial position of the movable abutment; and
an anti-rotation member configured to move between first and second positions,
wherein in the first position the anti-rotation member prevents rotational movement of the nut and, in turn, prevents axial movement of the movable abutment, and in the second position the anti-rotation member does not prevent rotational movement of the nut and permits rotation of the nut and, in turn, axial movement of the movable abutment to vary the force exerted by the resilient member.

2. An apparatus as claimed in claim 1, further comprising an input shaft rotatable about the axis.

3. An apparatus as claimed in claim 2, wherein the shaft comprises a screw thread and the nut is fastened onto the screw thread.

4. An apparatus as claimed in claim 2 or 3, wherein the movable abutment and/or the nut and/or the anti-rotation member are located concentrically about the shaft.

5. An apparatus as claimed in any preceding claim, wherein the anti-rotation member is fixed against rotational movement when it occupies its first position.

6. An apparatus as claimed in any preceding claim, wherein the anti-rotation member moves axially between its first position and its second position.

7. An apparatus as claimed in any preceding claim, wherein the nut comprises one or more notches or cavities, and the anti-rotation member comprises one or more members configured to engage with the one or more notches or cavities when the anti-rotation member occupies its first position, such that rotational movement of the nut is prevented by and upon engagement of the members with the notches or cavities.

8. An apparatus as claimed in claim 7, wherein the engaging members of the anti-rotation member always occupy the same circumferential position when the anti-rotation member occupies its first position, such that each notch or cavity corresponds to a set or predetermined rotational position of the nut.

9. An apparatus as claimed in claim 7 or 8, wherein the one or more notches or cavities comprise a plurality of notches or cavities spaced around a circumference of the nut.

10. An apparatus as claimed in claim 9, wherein the plurality of notches or cavities comprises at least 2, 4, 6, 8 or 10 notches or cavities.

11. An apparatus as claimed in claim 9 or 10, wherein the plurality of notches or cavities are spaced equally about a circumference of the nut.

12. An apparatus as claimed in any of claims 7-11, wherein the engaging members are tines configured to mate with any one of the notches or cavities.

13. A torque limiter, comprising:
an apparatus as claimed in any preceding claim;
a rotational input drive member, for example the input shaft of claim 2;
a rotational output drive member co-axial with the input drive member;
one or more components through which torque is transmitted from the input drive member to the output drive member, wherein the force exerted by the resilient member adjusts a torque limit of the torque limiter in use by varying the force exerted by the resilient member on the one or more components.

14. A torque limiter as claimed in claim 13, further comprising a braking device attached to said input drive member or said output drive member and configured to restrict or prevent rotational movement of the torque limiter if the torque applied by said input drive member exceeds a given or predetermined amount.

15. A torque limiter as claimed in claim 14, wherein the coupling member is movable between a first position and a second position, wherein in the first position the coupling member couples the input drive member and the output drive member to transfer torque between the input drive member and the output drive member, and in the second position the coupling member is decoupled from one or other of the input drive member and the output drive member, so as to prevent torque being transferred between the input drive member and the output drive member.
